# EUROPÄISCHE PATENTSCHRIFT

(11) **EP 1 191 076 B1**
(45) Veröffentlichungstag und Bekanntmachung des Hinweises auf die Patenterteilung: **29.11.2006**
(21) Anmeldenummer: 01121522.5
(22) Anmeldetag: 08.09.2001
(51) Int. Cl.: C09D 5/22, C09D 7/12, C09J 7/02, C09K 11/00

(54) **Lumineszenzfähige Beschichtungsmasse**
Luminescent coating composition
Composition de revêtement luminescente

(30) Priorität: 25.09.2000 DE 10047677
(43) Veröffentlichungstag der Anmeldung: 27.03.2002
(73) Patentinhaber: AVERY DENNISON CORPORATION, Pasadena, CA 91103 (US)
(72) Erfinder: Kohla, Michael, Dipl.-Chem. Dr., 48329 Havixbeck (DE); Frigge, Christoph, Dipl.-Chem. Dr., 45549 Sprockhövel-Hasslinghausen (DE)
(74) Vertreter: Gesthuysen, von Rohr & Eggert

(56) Entgegenhaltungen:
- EP-A- 0 066 854
- EP-A- 0 253 543
- WO-A-99/63145

## Beschreibung

Die vorliegende Erfindung betrifft eine lumineszenzfähige Beschichtungsmasse. Insbesondere betrifft die vorliegende Erfindung eine Beschichtungsmasse aus Bindemittel und lumineszenzfähigen Fasern sowie die Verwendung dieser Beschichtungsmasse, insbesondere zur Kennzeichnung von Gegenständen.

Unter dem Begriff "Lumineszenz" versteht man die von Gasen, Flüssigkeiten oder Festkörpern nach geeigneter Energiezufuhr erzeugte Emission von Licht, wobei das emittierte Licht im sichtbaren Bereich, im UV- Bereich, im Infrarotbereich und/oder im Spektralbereich liegen kann. Es werden zwei Erscheinungsformen der Lumineszenz unterschieden, nämlich die Fluoreszenz und die Phosphoreszenz. Für Einzelheiten kann verwiesen werden auf Römpp Lexikon Chemie, 10. Auflage, Stichworte "Lumineszenz", "Fluoreszenz" und "Phosphoreszenz" sowie auf die dort referierte Literatur.

Beschichtungen, in denen lumineszierende Farbstoffe oder Pigmente selbst homogen eingearbeitet sind, sind handelsüblich. So dienen. Klebstoffe mit fluoreszierenden Farbpigmenten zur optischen Detektion von Etiketten. Diese Beschichtungen werden aber nicht im Sinne von Sicherheitskennzeichnungen eingesetzt, da sie relativ unspezifisch sind. Bei Papier- und Textilbeschichtungen würden sie zudem von den darin meist enthaltenen Weißmachern (OBA) überstrahlt. Außerdem sind die einzusetzenden Mengen an Fluoreszenzfarbstoffen in diesen Fällen relativ groß.

Aus den deutschen Offenlegungsschriften 195 10 468 und 195 49 374 ist eine bei Tageslicht dauerhaft fluoreszierende, lichtdurchlässige Folie bekannt, wobei der Fluoreszenzeffekt dadurch erzeugt wird, daß in die fluoreszierende Folie, gleichmäßig über die gesamte Folie verteilt, Farbpigmente in größeren Mengen eingearbeitet sind. Eine ähnliche, dauerhaft fluoreszierende Klebefolie aus einem lichtdurchlässigen Folienmaterial, das mit größeren Mengen eines fluoreszierenden Farbstoffs, über die gesamte Folie verteilt, eingefärbt ist, ist in der deutschen Gebrauchsmusterschrift 91 17 086 und in der europäischen Patentschrift 0 594 765 beschrieben.

Die zuvor beschriebenen Folien des sind aber nicht zur Sicherheitskennzeichnung geeignet, sondern zur Erzeugung eines optischen Effekts, der vorzugsweise für Werbezwecke ausgenutzt wird, konzipiert, weil diese Folien eine dauerhafte, bereits mit bloßem Auge erkennbare Lumineszenz zeigen. Des weiteren ist eine relativ große Menge an Farbstoffpigmenten erforderlich, um den Lumineszenzeffekt über die gesamte Folie gleichmäßig verteilt zu erzeugen.

Aufgabe der vorliegenden Erfindung ist die Bereitstellung eines Systems, welches eine Kennzeichnung von Gegenständen ermöglicht. Dabei soll die Fähigkeit bestimmter Stoffe zur Lumineszenz ausgenutzt werden. Insbesondere soll das System die Anbringung einer Sicherheits- oder Identifizierungsfunktion ermöglichen.

Gegenstand der vorliegenden Erfindung ist eine Beschichtungsmasse, die mindestens ein organisches Bindemittel und lumineszenzfähige Fasern enthält, wobei die lumineszenzfähigen Fasern aus einem faserbildenden Material mit mindestens einem darin verteilten lumineszenzfähigen Farbstoff oder Pigment bestehen.

Die erfindungsgemäße Beschichtungsmasse kann dazu verwendet werden, um Gegenstände aller Art zu kennzeichnen, indem die erfindungsgemäße Beschichtungsmasse auf die Oberfläche dieser Gegenstände aufgetragen wird.

Bei dem organischen Bindemittel kann es sich um Bindemittel aller Art handeln. Das organische Bindemittel muß jedoch derart ausgewählt sein, daß die Lumineszenzpigmente bzw. -farbstoffe nicht angegriffen werden und nicht von der Faser gelöst werden. Dies gilt auch für weiter in der Beschichtungsmasse enthaltene Stoffe, insbesondere für eventuell in der Beschichtungsmasse enthaltene Lösemittel. Beispiele für geeignete organische Bindemittel sind Lacke aller Art, insbesondere Klarlacke. Bei dem organischen Bindemittel kann es sich auch um Papier- oder Folienstreichmassen handeln. Des weiteren kann es sich bei dem organischen Bindemittel um Klebstoffe aller Art handeln; Beispiele für in Betracht kommende Klebstoffe sind Haftklebstoffe, z. B. Haftklebstoffe auf Lösemittelbasis, Haftklebstoffe auf Dispersionsbasis oder Schmelzhaftklebstoffe. Das in der erfindungsgemäßen Beschichtungsmasse eingesetzte organische Bindemittel ist insbesondere ein klares, d. h. transparentes oder im wesentlichen transparentes organisches Bindemittel. Jedoch ist es auch möglich, trübe bis opake Bindemittel einzusetzen, insbesondere wenn die Beschichtungsmasse dünn aufgetragen wird und die Fasern aus der Beschichtung "herauskommen".

Die erfindungsgemäß verwendeten lumineszenzfähigen Fasern sind an sich bekannt (siehe die deutschen Offenlegungsschriften 195 39 315 und198 02 588 sowie die USA-Patentschrift 5,674,437) und sind im Handel erhältlich. Hersteller solcher Fasern sind die Firma Honeywell, Speciality Chemicals, früher Riedel-de-Haën, welche eine Vielzahl lumineszierender Fasern unter dem Markennamen Lumilux^{®} vertreibt, wobei die in den Fasern verteilten lumineszenzfähigen Farbstoffpigmente je nach Molekül Licht unterschiedlicher Wellenlänge bzw. Farbe emittieren (z.B. Fasern vom Typ Lumilux^{®} Blau MF-P 831/22/3-LT, Lumilux^{®} Rot MF-P-870/LT, Lumilux^{®} Gelb MF-P 833/22/3-LT).

Bislang sind Fasern der zuvor beschriebenen Art nur bei der Herstellung faserförmiger Materialien wie Papier oder Textilien in diese mit eingearbeitet worden; bei der Papierproduktion werden diese Fasern dem Pulp zugegeben und bei der Textilproduktion dem Rohstoff, aus dem die Fasern gesponnen werden. Daraus resultieren relativ große Produktionschargen. Die Lumineszenzfasern dienen in diesen Produkten als nur schwer zu fälschendes Sicherheitsmerkmal, z. B. bei Geldscheinen. Basis dieser Fasern sind Seide, Cellulose, Celluloseacetat, Polyamide, Polyester; diese werden mit organischen oder anorganischen Lumineszenzfarbstoffen eingefärbt (siehe die deutschen Offenlegungsschriften 195 39 315 und 198 02 588 sowie die USA-Patentschrift 5,674,437). Im Stand der Technik sind diese Fasern aber nicht dazu verwendet worden, um Funktionsbeschichtungen herzustellen.

Die Herstellung der erfindungsgemäß verwendeten lumineszierenden Fasern ist aus dem Stand der Technik bekannt. Es kann beispielsweise verwiesen werden auf die deutschen Offenlegungsschriften 195 39 315 und 198 02 588 sowie die USA-Patentschrift 5,674,437.

Bei der Herstellung der lumineszenzfähigen Fasern wird im allgemeinen so vorgegangen, daß man den lumineszenzfähigen Farbstoff dem faserbildenden Material oder einer Lösung desselben zusetzt und daraus Fasern spinnt. Es ist auch möglich, die Fasern oder das fasernbildende Material mit einer Lösung oder Dispersion des lumineszenzfähigen Farbstoffs in Kontakt zu bringen (z. B. durch Besprühen, Eintauchen, Tränke etc.) und die so erhaltenen Fasern zu trocknen.

Die verwendete Menge an lumineszenzfähigen Fasern in der erfindungsgemäßen Beschichtungsmasse und die Beschaffenheit der Fasern, insbesondere Länge und Dicke der Fasern sowie die Art des Fasermaterials und des Farbstoffs, sind so abgestimmt, daß der Beschichtungsprozeß nicht gestört wird. Andererseits muß aber eine Kennzeichnungsfunktion erzielt werden können.

Im allgemeinen enthält die erfindungsgemäße Beschichtungsmasse, bezogen auf 100 Gewichtsteile der Beschichtungsmasse, 0,0001 bis 10 Gewichtsteile, insbesondere 0,001 bis 7,5 Gewichtsteile, vorzugsweise 0,001 bis 5 Gewichtsteile, der lumineszierenden Fasern. Die Länge der erfindungsgemäß eingesetzten lumineszierenden Fasern kann in weiten Grenzen variieren und liegt im allgemeinen im Bereich von 0,05 bis 10 mm, insbesondere im Bereich von 0,1 bis 5 mm. Die Dicke der eingesetzten lumineszierenden Fasern kann ebenfalls in weiten Grenzen variieren und liegt typischerweise im Bereich von 1 bis 1.000 µm, insbesondere im Bereich von 10 bis 100 µm.

Bei dem faserbildenden Material kann es sich um alle bekannten faserbildenden Materialien handeln, sofern sie mit der erfindungsgemäßen Beschichtungsmasse kompatibel sind. Beispiele für geeignete faserbildende Materialien sind Seide, Cellulose, Celluloseacetat, Polyamide, Polyester, Polyacrylate, Polyolefine, Polyurethane, Baumwolle sowie Mischungen der zuvor genannten Materialien. Die eingesetzten Fasern enthalten den lumineszenzfähigen Farbstoff oder das lumineszenzfähige Pigment typischerweise in einer Menge von mehr als 5 bis zu 50 Gew.-%, insbesondere von 7 bis 40 Gew.-%, vorzugsweise 10 bis 20 Gew.-%,, bezogen auf das Gesamtgewicht der Faser.

Der lumineszenzfähige Farbstoff oder das lumineszenzfähige Pigment können anorganischer oder organischer Natur sein. Insbesondere sollte der lumineszenzfähige Farbstoff oder das lumineszenzfähige Pigment - wenigstens teilweise - bei Anregung mit ultravioletter Bestrahlung einen Lumineszenzeffekt zeigen. Dabei kann der Lumineszenzeffekt auf Fluoreszenz oder Phosphoreszenz beruhen.

Gemäß einer Ausführungsform der Erfindung ist der lumineszenzfähige Farbstoff oder das lumineszenzfähige Pigment derart ausgewählt, daß er/es bei Anregung mit ultravioletter Strahlung im Bereich des sichtbaren oder/und infraroten Lichts emittiert. Insbesondere ist der lumineszenzfähige Farbstoff oder das lumineszenzfähige Pigment derart ausgewählt, daß er/es bei Anregung mit ultravioletter Strahlung zumindest im Bereich des sichtbaren Lichts emittiert. Beispielsweise kann das lumineszenzfähige Pigment ein anorganischer Leuchtstoff sein. Beispiele hierfür sind Phosphate, Wolframate, Oxide, Silikate und Aluminate der Erdalkalimetalle, der Nebengruppenelemente oder der Seltenen Erden sowie der Halogenide der Alkali- oder Erdalkalimetalle, die mit einem oder mehreren Aktivatoren, z. B. Mn²⁺, Mn⁴⁺, Sb³⁺, Sn²⁺, Pb²⁺, Cu⁺, Ag⁺, Seltene Erden, dotiert sind. Weitere Beispiele sind Zinksulfide, Zinkcadmiumsulfide, Erdalkalialuminate, Erdalkalisulfide und Erdalkalisilikate sowie deren Mischungen, jeweils dotiert mit mindestens einem Übergangsmetall- und/oder Lanthanoidelement. Für weitere Beispiele kann verwiesen werden auf die deutschen Offenlegungsschriften 195 39 315 und 198 02 588 sowie die USA-Patentschrift 5,674,437.

Der lumineszenzfähige Farbstoff oder das lumineszenzfähige Pigment kann aber auch ein organischer Leuchtstoff sein. Beispiele hierfür sind lumineszenzfähige, insbesondere fluoreszenzfähige, homo- oder heterocyclischen Aromatensysteme, wie lumineszenz-, vorzugsweise fluoreszenzfähige Benzol-, Acridin-, Xanthen-, Thioxanthen-, Pyren-, Stilben-, Cumarin- und Pyrazolin-Derivate sowie Mischungen der zuvor genannten Verbindungen.

Der lumineszenzfähige Farbstoff oder das lumineszenzfähige Pigment ist im allgemeinen ein Fluorochrom (Fluoreszenzfarbstoff). Erfindungsgemäß in Betracht kommt aber auch die Möglichkeit, daß der lumineszenzfähige Farbstoff oder das lumineszenzfähige Pigment ein Fluorogen ist, welches erst durch chemische Reaktion, z. B. enzymatisch katalysiert oder auch nicht, in eine fluoreszenzfähige chemische Verbindung umgesetzt wird. Unter dem Begriff "lumineszenzfähiger Farbstoff" oder "lumineszenzfähiges Pigment", wie er im Rahmen der Erfindung verwendet wird, wird sowohl der lumineszenzfähige Farbstoff (Pigment) selbst als auch ein geeigneter Vorläufer (Precursor) verstanden, welcher durch chemische Reaktion in den lumineszenzfähigen Farbstoff (Pigment) umgewandelt wird.

Gemäß einer besonderen Ausführungsform der Erfindung besteht die Möglichkeit, in der Beschichtungsmasse verschiedene Fasern miteinander zu kombinieren, auf die unterschiedliche lumineszenzfähige Farbstoffe oder Pigmente aufgebracht sind, die nach Anregung mit geeigneter Energie Licht unterschiedlicher Wellenlänge bzw. Spektralfarbe emittieren.

Neben dem organischen Bindemittel und den lumineszenzfähigen Fasern kann die erfindungsgemäße Beschichtungsmasse außerdem übliche Additive, Verarbeitungshilfsmittel oder Zusatzstoffe aller Art enthalten. Die Additive, Verarbeitungshilfsmittel oder Zusatzstoffe müssen jedoch derart ausgewählt sein, daß die Lumineszenzpigmente bzw. -farbstoffe nicht angegriffen oder von der Faser gelöst werden. Beispiele für geeignete Additive, Verarbeitungshilfsmittel oder Zusatzstoffe sind Füllstoffe, Oxidationsschutzmittel, Alterungsschutzmittel, Additive zum Schutz gegen UV-Strahlung, fließfähigkeitsbeeinflussende Additive, Lösungs- und Dispergiermittel, Emulgatoren oder Farbpigmente.

Gemäß einer besondere Ausführungsform der Erfindung kann die erfindungsgemäße Beschichtungsmasse ein selektives UV-Alterungsschutzadditiv enthalten, welches den kurzwelligen Sonnenlichtanteil absorbiert. Hierdurch wird die Haltbarkeit bzw. die Lumineszenzfähigkeit der Fasern über längere Zeiträume bewahrt.

Gegenstand der vorliegenden Erfindung ist auch ein Verfahren zur Herstellung einer lumineszenzfähigen Beschichtung auf Oberflächen aus Kunststoff, Papier, Pappe, Karton, Textilien oder Metallen durch Auftragen der erfindungsgemäßen Beschichtungsmasse. Der Auftrag auf die Oberfläche erfolgt dabei im allgemeinen mit einer Schichtdicke von 0,1 bis 1.000 µm, insbesondere von 1 bis 500 µm. Der Beschichtungsprozeß ist so gestaltet, daß er - bedingt durch die Zusammensetzung der erfindungsgemäßen Beschichtungsmasse, insbesondere durch die Menge, Länge und Stärke der erfindungsgemäß verwendeten Lumineszenzfasern - durch die Anwesenheit der Fasern nicht gestört wird. Für die hier in Frage kommenden Schichtdicken von 0,1 bis 1.000 µm, insbesondere von 1 bis 500 µm, können vorzugsweise Verfahren wie der Rakelauftrag, der Walzenauftrag, der Sprühauftrag oder der Gießauftrag eingesetzt werden.

Damit ergeben sich beispielsweisefolgende neue Anwendungsmöglichkeiten:

Die Beschichtungsmasse wird insbesondere dazu verwendet, um auf der Oberfläche von Gegenständen eine lumineszenzfähige Beschichtung zu erzeugen. Mit der Beschichtungsmasse können nahezu beliebige Arten von Oberflächen beschichtet werden, so Oberflächen aus Kunststoffen, Papier, Pappe, Karton, Textilien oder Metallen.

Die Aufbringung der lumineszierenden Beschichtungsmasse kann zur Kennzeichnung von Gegenständen genutzt werden, d. h. zur Anbringung einer Identifizierungs- oder Sicherheitsfunktion dienen. Werden die Fasern in einen Haftklebstoff eingearbeitet, so kann dieser in Kombination mit transparenten Folien als Laminierfolie für Wertdokumente dienen; die Laminierfolie ermöglicht die rationelle Herstellung kleiner und kleinster Losgrößen. Kleine Aufkleber, unter Umständen in Kombination mit leicht einreißender Sicherheitsfolie, können beispielsweise als Sicherheitslabel dienen.

In Verbindung mit den beschriebenen Beschichtungsmassen ermöglichen unterschiedliche Farbkombinationen, d. h. Kombinationen von Fasern mit unterschiedlichen Leuchtstoffpigmenten, unter UV-Licht eine Zuordnung. Auf diese Weise können unterschiedlich markierte Objekte leicht eindeutig identifiziert werden. Des weiteren kann die lumineszenzfähige Beschichtungsmasse auch zur Erzeugung eines optischen Effekts genutzt werden. Werden die lumineszierenden Fasern in einen Lack eingearbeitet, können in Verbindung mit geeigneten Lichtquellen interessante Leuchteffekte für Werbung oder Produktdesign erzielt werden.

Die Beschichtungsmasse kann insbesondere dazu verwendet werden, um bahnförmige Materialien aller Art wie Metallfolien oder Kunststoffolien, insbesondere Etikettenfolien bzw. selbstklebende Etikettenfolien, Klebebänder, Papiere, Pappen und Kartone, Textilien oder Faserstoffe zu beschichten. Bei den Kunststoffolien kann es sich um transparente, aber auch um nichttransparente farbige Folien handeln.

Gemäß einer besonderen Ausführungsform kann die erfindungsgemäße Beschichtungsmasse bei der Herstellung von Etikettenfolien verwendet werden.

Etikettenfolien bestehen im allgemeinen aus einer eigentlichen Folienschicht, auf deren einer Seite eine Haftklebeschicht aufgebracht wird, wobei letztere mit einem abziehbaren Schutzpapier, z. B. silikonisiertes oder wachsbeschichtetes Papier, abgedeckt sein kann; gegebenenfalls kann die Folienschicht auf der der Haftklebeschicht abgewandten Seite zur besseren Bedruckbarkeit zusätzlich mit einem Drucklack beschichtet sein.

Als Haftklebeschicht kann eine Beschichtungsmasse aus Haftkleber, lumineszierenden Fasern und gegebenenfalls üblichen Zusatzstoffen verwendet werden; aus dieser Folie lassen sich dann Etiketten oder Aufkleber (Label) erhalten, deren Haftklebschicht eine Sicherheitsfunktion aufweist.

Des weiteren besteht die Möglichkeit, die Etikettenfolie mit einer erfindungsgemäßen Beschichtungsmasse aus Lack, z. B. Drucklack, lumineszierenden Fasern und gegebenenfalls üblichen Zusatzstoffen auf der der Haftklebeschicht abgewandten Folienseite zu lackieren; aus dieser Folie lassen sich dann Etiketten oder Aufkleber (Label) erhalten, deren Lackschicht eine Sicherheitsfunktion aufweist. Bei dem Lack kann es sich um einen Drucklack handeln, der die Bedruckbarkeit der Etikettenfolie ermöglicht bzw. verbessert. Selbstverständlich kann im Fall der Etikettenfolien sowohl die Haftklebeschicht als auch die gegebenenfalls vorhandene Lackschicht ausgehend von einer erfindungsgemäßen Beschichtungsmasse hergestellt werden.

Ein Vorteil der Erfindung liegt darin, daß lumineszierende Fasern mit daran aufgebrachten Lumineszenzfarbstoffen - gegenüber einer homogenen Einfärbung mit den Lumineszenzfarbstoffpartikeln selbst - eine lokale Konzentration der Emmissionsintensität und damit eine bessere Erkennbarkeit ermöglichen. Dies erlaubt den Einsatz weit geringerer Pigment- bzw. Farbstoffkonzentrationen insgesamt. Mit anderen Worten lassen sich durch die Aufbringung der Farbstoffpigmente auf das Fasermaterial hohe lokale Konzentrationen an Farbstoff bei gleichzeitig geringer Absolutkonzentration in bezug auf die Beschichtungsmasse und somit eine gute Detektierbarkeit, d. h. ein günstiges Signal/Rausch-Verhältnis erzielen.

Durch Mischen von Fasern unterschiedlicher Lumineszenzfarben und durch unterschiedliche Mischungsverhältnisse der Fasern besteht ein nahezu unbegrenzter Spielraum für verschiedene Codierungen.

Ein Vorteil der Einbringung der Fasern in eine Beschichtungsmasse und der anschließenden Beschichtung von z. B. Papier, Textilien, Folien oder anderen Gegenständen ist die sehr viel universellere Einsatzmöglichkeit. Vor allem sind auch kleine Losgrößen wirtschaftlich zu fertigen. Bei Einsatz einer erfindungsgemäßen Beschichtungsmasse in Form eines Klebstoffes oder eines Lacks als Beschichtung ergeben sich zusätzliche Sicherheitsfunktionen.

Die Menge an Fasern in der Beschichtungsmasse sowie die Faserdimensionen sind im allgemeinen so bemessen, daß bei Betrachtung mit bloßem Auge bei Tageslicht die Fasern also solche nicht oder kaum erkennbar sind, z. B. im Fall von klaren, transparenten Beschichtungsmassen allenfalls als geringfügige Trübung in der Beschichtung wahrgenommen werden. Bei Anregung durch eine geeignete Lichtquelle dagegen, beispielsweise unter einer UV-Lampe, ist die Lumineszenz der Fasern aufgrund der hohen lokalen Farbstoffkonzentration bereits mit bloßem Auge erkennbar, sofern solche Farbstoffe verwendet werden, die nach Anregung zumindest teilweise im sichtbaren Wellenlängenbereich emittieren.

Durch die Auswahl des Leuchtstoffs läßt sich die Sicherheitsfunktion nahezu beliebig steuern. Wählt man solche Leuchtstoffpigmente, die nach Anregung mit Licht geeigneter Energie nur im IR-Spektralbereich emittieren, erhält man eine zusätzliche Sicherheitsfunktion, da die Emission mit bloßem Auge nicht sichtbar ist und nur mit geeigneten Methoden, z. B. IR-spektroskopisch, detektierbar ist.

Die vorliegende Erfindung wird anhand der folgenden Ausführungsbeispiele veranschaulicht, welche die Erfindung jedoch keinesfalls beschränken.

### Beispiel 1

In 100 Teile der Lösung eines Polyacrylathaftklebstoffes in Ethylacetat (Festkörpergehalt: 30 %) werden 0,01 Teile handelsüblicher, bei UV-Bestrahlung lumineszierender Fasern vom Typ Lumilux^{®} Rot MF-P 870/LT (Firma Honeywell, Speciality Chemicals, früher Riedel-de-Haen) homogen eingerührt. Der Klebstoff wird anschließend mittels eines Rakels als dünne Schicht von 200 µm auf eine PVC-Folie aufgebracht und dann mittels Warmluft getrocknet. Die getrocknete Klebstoffschicht (60 µm) wird dann mit einem silikonisierten Papier abgedeckt. Nach Weiterverarbeitung der Haftfolie mittels Schneiden oder Stanzen erhält man selbstklebende Etiketten oder Klebebänder, deren Klebstoffschicht bei Bestrahlung mit UV-Licht eine rote Fluoreszenz im Bereich der eingearbeiteten Fasern zeigt. Bei Betrachtung mit bloßem Auge bei Tageslicht sind die Fasern also solche nicht erkennbar. Unter der UV-Lampe dagegen ist die Lumineszenzerscheinung bereits mit bloßem Auge deutlich sichtbar.

### Beispiel 2

In 100 Teile der Lösung eines Polyacrylathaftklebstoffes in Ethylacetat (Festkörpergehalt: 30 %) wird eine Mischung verschiedener, handelsüblicher, bei UV-Bestrahlung lumineszierender Fasern, nämlich 0,005 Teile lumineszierender Fasern vom Typ Lumilux^{®} Rot MF-P 870/LT, 0,004 Teile lumineszierender Fasern vom Typ Lumilux^{®} Blau MF-P 871/LT und 0,002 Teile lumineszierender Fasern vom Typ Lumilux^{®} Grün MF-P 877/LT, homogen eingerührt. Der Klebstoff wird anschließend mittels eines Rakels als dünne Schicht von 60 µm auf eine transparente Polyesterfolie aufgebracht und mittels Warmluft getrocknet. Die getrocknete Klebstoffschicht (20 µm) wird mit einem silikonisierten Papier abgedeckt. Nach Weiterverarbeitung der Haftfolie erhält man eine selbstklebende Laminierfolie, die bei Bestrahlung mit UV-Licht lokal eine bunte Fluoreszenz - je nach Faser rot, blau bzw. grün - jeweils im Bereich der eingearbeiteten Fasern zeigt. Bei Betrachtung mit bloßem Auge bei Tageslicht sind die Fasern also solche nicht erkennbar. Unter der UV-Lampe dagegen ist die Lumineszenzerscheinung bereits mit bloßem Auge deutlich sichtbar.

### Beispiel 3

In 100 Teile der wäßrigen Dispersion eines Polyacrylathaftklebstoffes (Festkörpergehalt: 50%) wird eine Mischung verschiedener, handelsüblicher, bei UV-Bestrahlung lumineszierender Fasern, nämlich 0,005 Teile lumineszierender Fasern vom Typ Lumilux^{®} Rot MF-P 870/LT, 0,004 Teile lumineszierender Fasern vom Typ Lumilux^{®} Blau MF-P 871/LT und 0,002 Teile lumineszierender Fasern vom Typ Lumilux^{®} Grün MF-P 877/LT, homogen eingerührt. Der Klebstoff wird mittels einer Gravurwalze als dünne Schicht von 40 µm auf ein Silikonpapier aufgebracht und mittels Warmluft getrocknet. Der getrocknete Klebstoff (20 µm) wird mit einem Papier kaschiert, so daß sich die Klebstoffschicht auf das Papier überträgt. Nach Weiterverarbeitung des Haftpapiers erhält man selbstklebende Etiketten, die bei Bestrahlung mit UV-Licht lokal eine bunte Fluoreszenz (rot, blau bzw. grün) im Bereich der Fasern zeigt. Bei Betrachtung mit bloßem Auge bei Tageslicht sind die Fasern also solche nicht erkennbar. Unter der UV-Lampe dagegen ist die Lumineszenzerscheinung bereits mit bloßem Auge deutlich sichtbar.

### Beispiel 4

In 100 Teile eines Polyesterlacks wird ein Mischung verschiedener, handelsüblicher, bei UV-Bestrahlung lumineszierender Fasern, nämlich 0,007 Teile lumineszierender Fasern vom Typ Lumilux^{®} Rot MF-P 870/LT und 0,003 Teile lumineszierender Fasern vom Typ Lumilux^{®} Grün MF-P 877/LT, homogen eingerührt. Nach Aufstreichen des Lacks als dünne Schicht (20 µm) auf verschiedene Oberflächen zeigt er nach Trocknung bei Bestrahlung mit UV-Licht lokal im Bereich der eingearbeiteten Fasern eine rote bzw. grüne Fluoreszenz. Bei Betrachtung mit bloßem Auge bei Tageslicht sind die Fasern also solche nicht erkennbar. Unter der UV-Lampe dagegen ist die Lumineszenzerscheinung bereits mit bloßem Auge deutlich sichtbar.

## Patentansprüche

1. Beschichtungsmasse, enthaltend mindestens ein organisches Bindemittel und Fasern, die ein faserbildendes Material mit mindestens einem darin verteilten lumineszenzfähigen Farbstoff oder Pigment umfassen.

2. Beschichtungsmasse nach Anspruch 1, wobei das organische Bindemittel ausgewählt ist aus der Gruppe von Lacken, Papier- oder Folienstreichmassen, Klebstoffen wie Haftklebstoffen sowie Mischungen der zuvor genannten Bindemittel.

3. Beschichtungsmasse nach Anspruch 2, wobei das organische Bindemittel ausgewählt ist aus der Gruppe von Klarlacken.

4. Beschichtungsmasse nach Anspruch 2, wobei das organische Bindemittel ausgewählt ist aus der Gruppe von Haftklebstoffen auf Lösemittelbasis, Haftklebstoffen auf Dispersionsbasis oder Schmelzhaftklebstoffen.

5. Beschichtungsmasse nach einem der Ansprüche 1 bis 4, wobei die Beschichtungsmasse, bezogen auf 100 Gewichtsteile der Beschichtungsmasse, 0,0001 bis 10 Gewichtsteile der Fasern enthält.

6. Beschichtungsmasse nach Anspruch 5, wobei die Beschichtungsmasse, bezogen auf 100 Gewichtsteile der Beschichtungsmasse, 0,001 bis 7,5 Gewichtsteile der Fasern enthält.

7. Beschichtungsmasse nach Anspruch 6, wobei die Beschichtungsmasse, bezogen auf 100 Gewichtsteile der Beschichtungsmasse, 0,001 bis 5 Gewichtsteile der Fasern enthält.

8. Beschichtungsmasse nach einem der Ansprüche 1 bis 7, wobei das faserbildende Material ausgewählt ist aus der Gruppe von Seide, Cellulose, Celluloseacetat, Polyamiden, Polyestern, Polyacrylaten, Polyolefinen, Polyurethanen und Baumwolle sowie deren Mischungen.

9. Beschichtungsmasse nach einem der Ansprüche 1 bis 8, wobei die Länge der Fasern im Bereich von 0,05 bis 10 mm liegt und/oder die Dicke der Fasern im Bereich von 1 bis 1.000 µm variiert.

10. Beschichtungsmasse nach Anspruch 9, wobei die Länge der Fasern im Bereich von 0,1 bis 5 mm liegt.

11. Beschichtungsmasse nach Anspruch 9 oder 10, wobei die Dicke der Fasern im Bereich von 10 bis 100 µm variiert.

12. Beschichtungsmasse nach einem Ansprüche 1 bis 11, wobei die Fasern den lumineszenzfähigen Farbstoff oder das lumineszenzfähige Pigment in einer Menge von mehr als 5 bis zu 50 Gew.-% enthält, bezogen auf das Gesamtgewicht der Fasern.

13. Beschichtungsmasse nach Anspruch 12, wobei die Fasern den lumineszenzfähigen Farbstoff oder das lumineszenzfähige Pigment in einer Menge von 7 bis 40 Gew.-% enthält, bezogen auf das Esamtgewicht der Fasern.

14. Beschichtungsmasse nach Anspruch 13, wobei die Fasern den lumineszenzfähigen Farbstoff oder das lumineszenzfähige Pigment in einer Menge von 10 bis 20 Gew.-% enthält, bezogen auf das Gesamtgewicht der Fasern.

15. Beschichtungsmasse nach einem der Ansprüche 1 bis 14, wobei der lumineszenzfähige Farbstoff oder das lumineszenzfähige Pigment ein anorganischer Leuchtstoff ist.

16. Beschichtungsmasse nach Anspruch 15, wobei der lumineszenzfähige Farbstoff oder das lumineszenzfähige Pigment ausgewählt ist aus der Gruppe von Zinksulfiden, Zinkcadmiumsulfiden, Erdalkalialuminaten, Erdalkalisulfiden und Erdalkalisilikaten sowie deren Mischungen, jeweils dotiert mit mindestens einem Übergangsmetall- und/oder Lanthanoidelement.

17. Beschichtungsmasse nach einem der Ansprüche 1 bis 15, wobei der lumineszenzfähige Farbstoff oder das lumineszenzfähige Pigment ein organischer Leuchtstoff ist.

18. Beschichtungsmasse nach Anspruch 17, wobei der lumineszenzfähige Farbstoff oder das lumineszenzfähige Pigment ausgewählt ist aus der Gruppe von fluoreszenzfähigen, homo- oder heterocyclischen Aromatensystemen, insbesondere Benzol-, Acridin-, Xanthen-, Thioxanthen-, Pyren-, Stilben-, Cumarin-, Pyrazolin-Derivaten sowie Mischungen der zuvor genannten Verbindungen.

19. Beschichtungsmasse nach einem der Ansprüche 1 bis 18, wobei der lumineszenzfähige Farbstoff oder das lumineszenzfähige Pigment ein Fluorochrom (Fluoreszenzfarbstoff) oder ein Fluorogen ist, welches erst durch chemische Reaktion in eine fluoreszenzfä-hige chemische Verbindung umgesetzt wird, wobei die chemische Reaktion enzymatisch katalysiert werden kann.

20. Beschichtungsmasse nach einem der Ansprüche 1 bis 19, wobei die Beschichtungsmasse übliche Additive, Verarbeitungshilfsmittel oder Zusatzstoffe enthalten kann wie Füllstoffe, Oxidationsschutzmittel, Alterungsschutzmittel, Additive zum Schutz gegen UV-Strahlung, fließfähigkeitsbeeinflussende Additive, Lösungs- und Dispergiermittel, Emulgatoren oder Farbpigmente, wobei das Additiv zum Schutz gegen UV-Strahlung ein vorzugsweise selektives UV-Alterungsschutzadditiv ist, welches den kurzwelligen Sonnenlichtanteil absorbiert.

21. Verwendung der Beschichtungsmasse nach einem der Ansprüche 1 bis 20 zur Erzeugung einer lumineszenzfähigen Beschichtung auf der Oberfläche von Gegenständen.

22. Verwendung nach Anspruch 21 zur Kennzeichnung von Gegenständen und/oder zur Erzeugung eines optischen Effekts.

23. Verwendung nach Anspruch 21 oder 22, wobei die Oberfläche aus Kunststoffen, Papier, Pappe, Karton, Textilien oder Metallen besteht.

24. Verwendung nach einem der Ansprüche 21 bis 23, wobei es sich bei den Gegenständen um bahnförmige Materialen aller Art wie Metallfolien oder Kunststoffolien handelt.

25. Verwendung nach Anspruch 24, wobei es sich bei den Gegenständen um Etikettenfolien, selbstklebende Etikettenfolien, Klebebänder, Papiere, Pappen und Kartone, Textilien oder Faserstoffe handelt.

26. Verfahren zur Herstellung einer lumineszenzfähigen Beschichtung auf Oberflächen aus Kunststoff, Papier, Pappe, Karton, Textilien oder Metallen durch Auftragen einer Beschichtungsmasse nach einem der Ansprüche 1 bis 20, wobei die Beschichtungsmasse mit einer Schichtdicke von 0,1 bis 1.000 µm auf die Oberfläche aufgetragen wird.

27. Verfahren nach Anspruch 26, wobei die Beschichtungsmasse mit einer Schichtdicke von 1 bis 500 µm, auf die Oberfläche aufgetragen wird.

28. Gegenstand, auf dessen Oberfläche eine Beschichtungsmasse nach einem der Ansprüche 1 bis 20 aufgetragen ist, wobei die Beschichtungsmasse mit einer Schichtdicke von 0,1 bis 1.000 µm aufgetragen ist.

29. Gegenstand nach Anspruch 28, wobei die Beschichtungsdicke mit einer Schichtdicke von 1 bis 500 µm aufgetragen ist.

30. Gegenstand nach Anspruch 28 oder 29, wobei es sich bei dem Gegenstand um Folien aller Art wie Metallfolien oder Kunststoffolien handelt.

31. Gegenstand nach Anspruch 28 oder 29, wobei es sich bei dem Gegenstand um Etikettenfolien, selbstklebende Etikettenfolien, Klebebänder, Papiere, Pappen und Kartone aller Art, Textilien aller Art oder Faserstoffe handelt.

32. Gegenstand nach Anspruch 28 oder 29, wobei es sich bei dem Gegenstand um ein Haftklebeetikett handelt, bei dem die Haftklebeschicht und/oder die gegebenenfalls vorhandene Lackschicht als lumineszenzfähige Schicht ausgebildet ist.

## Claims

1. Coating compound comprising at least one organic binder and fibres which comprise a fibre-forming material distributed within which is at least one luminescable dye or pigment.

2. Coating compound according to Claim 1, wherein the organic binder is selected from the group of varnishes, paper-coating slips, film-coating compounds, adhesives, such as pressure-sensitive adhesives, and mixtures of the aforementioned binders.

3. Coating compound according to Claim 2, wherein the organic binder is selected from the group of transparent varnishes.

4. Coating compound according to Claim 2, wherein the organic binder is selected from the group of solvent-based pressure-sensitive adhesives, dispersion-based pressure-sensitive adhesives or hot-melt pressure-sensitive adhesives.

5. Coating compound according to any one of Claims 1 to 4, containing 0.0001 to 10 parts by weight of the fibres per 100 parts by weight of the coating compound.

6. Coating compound according to Claim 5, containing 0.001 to 7.5 parts by weight of the fibres per 100 parts by weight of the coating compound.

7. Coating compound according to Claim 6, containing 0.001 to 5 parts by weight of the fibres per 100 parts by weight of the coating compound.

8. Coating compound according to any one of Claims 1 to 7, wherein the fibre-forming material is selected from the group of silk, cellulose, cellulose acetate, polyamides, polyesters, polyacrylates, polyolefins, polyurethanes and cotton, and also blends thereof.

9. Coating compound according to any one of Claims 1 to 8, wherein the length of the fibres is in the range from 0.05 to 10 mm and/or the thickness of the fibres varies in the range from 1 to 1000 µm.

10. Coating compound according to Claim 9, wherein the length of the fibres is in the range from 0.1 to 5 mm.

11. Coating compound according to Claim 9 or 10, wherein the thickness of the fibres varies in the range from 10 to 100 µm.

12. Coating compound according to any one of Claims 1 to 11, wherein the fibres comprise the luminescable dye or pigment in an amount of more than 5% up to 50% by weight, based on the total weight of the fibres.

13. Coating compound according to Claim 12, wherein the fibres comprise the luminescable dye or pigment in an amount of 7% to 40% by weight, based on the total weight of the fibres.

14. Coating compound according to Claim 13, wherein the fibres comprise the luminescable dye or pigment in an amount of 10% to 20% by weight, based on the total weight of the fibres.

15. Coating compound according to any one of Claims 1 to 14, wherein the luminescable dye or pigment is an inorganic luminophore.

16. Coating compound according to Claim 15, wherein the luminescable dye or pigment is selected from the group of zinc sulphides, zinc cadmium sulphides, alkaline earth metal aluminates, alkaline earth metal sulphides and alkaline earth metal silicates, and also mixtures thereof, in each case doped with at least one transition-metal element and/or lanthanoid element.

17. Coating compound according to any one of Claims 1 to 14, wherein the luminescable dye or pigment is an organic luminophore.

18. Coating compound according to Claim 17, wherein the luminescable dye or pigment is selected from the group of fluorescable, homocyclic or heterocyclic aromatic systems, especially benzene, acridine, xanthene, thioxanthene, pyrene, stilbene, coumarin and pyrazoline derivatives, and also mixtures of the aforementioned compounds.

19. Coating compound according to any one of Claims 1 to 18, wherein the luminescable dye or pigment is a fluorochrome (fluorescent colorant) or a fluorogen which is converted only by chemical reaction into a fluorescable chemical compound, it being possible for the chemical reaction to be enzymatically catalysed.

20. Coating compound according to any one of Claims 1 to 19, possibly comprising typical additives, processing aids or adjuvants, such as fillers, antioxidants, anti-aging agents, UV radiation protectants, fluidity-influencing additives, solvents and dispersants, emulsifiers or colour pigments, the UV radiation protectant being a preferably selective UV-aging protectant which absorbs the short-wave sunlight component.

21. Use of the coating compound according to any one of Claims 1 to 20 for producing a luminescable coating on the surface of articles.

22. Use according to Claim 21 for identifying articles and/or for producing an optical effect.

23. Use according to Claim 21 or 22, the surface being composed of plastics, paper, paperboard, cardboard, textiles or metals.

24. Use according to any one of Claims 21 to 23, the articles being web-form materials of any kind such as metal foils or polymeric films.

25. Use according to Claim 24, the articles being label films, including self-adhesive label films, adhesive tapes, papers, paperboards and cardboards, textiles or fibre materials.

26. Process for producing a luminescable coating on the surfaces of plastic, paper, paperboard, cardboard, textiles or metals by application of a coating compound according to any one of Claims 1 to 20, the coating compound being applied with a layer thickness of 0.1 to 1000 µm to the surface.

27. Process according to Claim 26, the coating compound being applied with a layer thickness of 1 to 500 µm to the surface.

28. Article to whose surface a coating compound according to any one of Claims 1 to 20 has been applied, the coating compound having been applied with a layer thickness of 0.1 to 1000 µm.

29. Article according to Claim 28, the coating material having been applied with a layer thickness of 1 to 500 µm.

30. Article according to Claim 28 or 29, the article comprising sheets of any kind such as metal foils or polymeric films.

31. Article according to Claim 28 or 29, the article comprising label films, including self-adhesive label films, adhesive tapes, papers, paperboards and cardboards of any kind, textiles of any kind or fibre materials.

32. Article according to Claim 28 or 29, the article being a pressure-sensitive adhesive label in which the pressure-sensitive adhesive layer and/or the varnish layer present if desired have/has been formed as a luminescable layer.

## Revendications

1. Matière de revêtement, contenant au moins un liant organique et des fibres qui comprennent un matériau fibrogène avec au moins un colorant ou pigment luminescent réparti dans celui-ci.

2. Matière de revêtement selon la revendication 1, dans laquelle le liant organique est choisi dans le groupe des peintures et vernis, des matières de couchage du papier ou d'enduction de films, des adhésifs tels que des autoadhésifs ainsi que des mélanges des liants précités.

3. Matière de revêtement selon la revendication 2, dans laquelle le liant organique est choisi dans le groupe des vernis.

4. Matière de revêtement selon la revendication 2, dans laquelle le liant organique est choisi dans le groupe des autoadhésifs à base de solvants, des autoadhésifs à base de dispersions ou des autoadhésifs fusibles.

5. Matière de revêtement selon l'une quelconque des revendications 1 à 4, dans laquelle la matière de revêtement contient, par rapport à 100 parties en poids de la matière de revêtement, de 0,0001 à 10 parties en poids des fibres.

6. Matière de revêtement selon la revendication 5, dans laquelle la matière de revêtement contient, par rapport à 100 parties en poids de la matière de revêtement, de 0,001 à 7,5 parties en poids des fibres.

7. Matière de revêtement selon la revendication 6, dans laquelle la matière de revêtement contient, par rapport à 100 parties en poids de la matière de revêtement, de 0,001 à 5 parties en poids des fibres.

8. Matière de revêtement selon l'une quelconque des revendications 1 à 7, dans laquelle le matériau fibrogène est choisi dans le groupe de la soie, 1a cellulose, l'acétate de cellulose, les polyamides, les polyesters, les polyacrylates, les polyoléfines, les polyuréthannes et le coton ainsi que des mélanges de ceux-ci.

9. Matière de revêtement selon l'une quelconque des revendications 1 à 8, dans laquelle la longueur des fibres se situe dans la plage allant de 0,05 à 10 mm et/ou l'épaisseur des fibres se situe dans la plage allant de 1 à 1 000 µm.

10. Matière de revêtement selon la revendication 9, dans laquelle la longueur des fibres se situe dans la plage allant de 0,1 à 5 mm.

11. Matière de revêtement selon la revendication 9 ou 10, dans laquelle l'épaisseur des fibres se situe dans la plage allant de 10 à 100 µm.

12. Matière de revêtement selon l'une quelconque des revendications 1 à 11, dans laquelle les fibres contiennent le colorant luminescent ou le pigment luminescent en une quantité de plus de 5 à 50 % en poids, par rapport au poids total des fibres.

13. Matière de revêtement selon la revendication 12, dans laquelle les fibres contiennent le colorant luminescent ou le pigment luminescent en une quantité de 7 à 40 % en poids, par rapport au poids total des fibres.

14. Matière de revêtement selon la revendication 13, dans laquelle les fibres contiennent le colorant luminescent ou le pigment luminescent en une quantité de 10 à 20 % en poids, par rapport au poids total des fibres.

15. Matière de revêtement selon l'une quelconque des revendications 1 à 14, dans laquelle le colorant luminescent ou le pigment luminescent est une substance luminescente inorganique.

16. Matière de revêtement selon la revendication 15, dans laquelle le colorant luminescent ou le pigment luminescent est choisi dans le groupe des sulfures de zinc, des sulfures de zinc et de cadmium, des aluminates de métaux alcalino-terreux, des sulfures de métaux alcalino-terreux et des silicates de métaux alcalino-terreux ainsi que des mélanges de ceux-ci, dopés chacun avec au moins un élément de type métal de transition et/ou lanthanide.

17. Matière de revêtement selon l'une quelconque des revendications 1 à 14, dans laquelle le colorant luminescent ou le pigment luminescent est une substance luminescente organique.

18. Matière de revêtement selon la revendication 17, dans laquelle le colorant luminescent ou le pigment luminescent est choisi dans le groupe des systèmes aromatiques homo- ou hétérocycliques fluorescents, en particulier des dérivés de benzène, acridine, xanthène, thioxanthène, pyrène, stilbène, coumarine, pyrazoline, ainsi que des mélanges des composés précités.

19. Matière de revêtement selon l'une quelconque des revendications 1 à 18, dans laquelle le colorant luminescent ou le pigment luminescent est un fluorochrome (colorant fluorescent) ou un fluorogène, qui n'est converti en un composé chimique fluorescent que par une réaction chimique, la réaction chimique pouvant être catalysée par voie enzymatique.

20. Matière de revêtement selon l'une quelconque des revendications 1 à 19, dans laquelle la matière de revêtement peut contenir des additifs usuels, des adjuvants de mise en oeuvre ou des additifs, tels que des charges, des antioxydants, des agents anti-vieillissement, des additifs pour la protection contre le rayonnement UV, des additifs agissant sur la fluidité, des solvants et des dispersants, des émulsifiants ou des pigments colorés, l'additif pour la protection contre le rayonnement UV étant un additif anti-vieillissement dû aux UV, de préférence sélectif, qui absorbe la fraction à courtes longueurs d'onde de la lumière solaire.

21. Utilisation de la matière de revêtement selon l'une quelconque des revendications 1 à 20, pour la production d'un revêtement luminescent sur la surface d'objets.

22. Utilisation selon la revendication 21, pour le marquage d'objets et/ou pour la production d'un effet optique.

23. Utilisation selon la revendication 21 ou 22, la surface consistant en des matières plastiques, du papier, de la carte, du carton, des textiles ou des métaux.

24. Utilisation selon l'une quelconque des revendications 21 à 23, dans laquelle les objets consistent en des matériaux en bande de tout type, tels que des feuilles métalliques ou des films de matière plastique.

25. Utilisation selon la revendication 24, dans laquelle les objets consistent en films pour étiquettes, films pour étiquettes autocollantes, rubans adhésifs, papiers, cartes et cartons, textiles ou matières fibreuses.

26. Procédé pour la production d'un revêtement luminescent sur la surface de matière plastique, papier, carte, carton, textiles ou métaux, par application d'une matière de revêtement selon l'une quelconque des revendications 1 à 20, dans lequel la matière de revêtement est appliquée sur la surface en une épaisseur de couche de 0,1 à 1 000 µm.

27. Procédé selon la revendication 26, dans lequel la matière de revêtement est appliquée sur la surface en une épaisseur de couche de 1 à 500 µm.

28. Objet sur la surface duquel est appliquée une matière de revêtement selon l'une quelconque des revendications 1 à 20, la matière de revêtement étant appliquée en une épaisseur de couche de 0,1 à 1 000 µm.

29. Objet selon la revendication 28, dans lequel la matière de revêtement est appliquée en une épaisseur de couche de 1 à 500 µm.

30. Objet selon la revendication 28 ou 29, dans lequel l'objet consiste en films de tout type, tels que des feuilles métalliques ou des films de matière plastique.

31. Objet selon la revendication 28 ou 29, dans lequel l'objet consiste en films pour étiquettes, films pour étiquettes autocollantes, rubans adhésifs, papiers, cartes et cartons de tout type, textiles de tout type ou matières fibreuses.

32. Objet selon la revendication 28 ou 29, dans lequel l'objet consiste en une étiquette autocollante dans laquelle la couche auto-adhésive et/ou la couche de peinture éventuellement présente est formée en tant que couche luminescente.
